# EUROPEAN PATENT SPECIFICATION

(11) **EP 1 462 561 B1**
(45) Date of publication and mention of the grant of the patent: **09.05.2007**
(21) Application number: 03254152.6
(22) Date of filing: 30.06.2003
(51) Int. Cl.: D06F 39/08, A47L 15/42, F16L 51/03, F16L 11/11, F16L 25/00

(54) **Assembly including an electrical appliance having a water outlet and a drain hose, and use of a drain hose**
Einheit bestehend aus einem elektrischen Gerät mit Wasserauslauf und einem Ablaufschlauch, sowie Verwendung eines Ablaufschlauches
Assemblage d'un appareil électrique avec sortie d'eau et tuyau de drainage, et utilisation d'un tuyau de drainage

(30) Priority: 26.03.2003 KR 2003018984
(43) Date of publication of application: 29.09.2004
(73) Proprietor: LG ELECTRONICS INC., Seoul (KR)
(72) Inventor: Heo, Seong Eun, Jinju-si, Gyeongsangnam-do (KR); Kim, Dong Yoon, Changwon-si, Gyeongsangnam-do (KR)
(74) Representative: Hale, Peter

(56) References cited:
- EP-A- 0 158 878
- EP-A- 0 527 297
- EP-A- 1 201 981
- US-A- 5 096 233
- US-A- 5 311 753
- US-A- 5 312 138

## Description

The present invention relates to an assembly of an electrical appliance and a drain hose, and more particularly, a continuous drain hose that connects a water outlet of a white goods appliance (e.g., a washing machine or dish washer), with an external drain pipe, and the use of such a drain hose.

The washing machine is an appliance for carrying out washing, rinsing, and sometimes spinning cycles to remove dirt from laundry using detergent and water. The washing machine has a drain pump for pumping out washing or rinsing water from a tub, and a drain hose connecting the drain pump with an external drain facility, such as drain pipe, for discharging the washing or rinsing water pumped by the drain pump.

In general, since the drain facility, such as the drain pipe, arranged in a laundry room of a building is vertically oriented, sometimes a discharge end of the drain hose has to be bent in a range of 90° ~ 180° for connection to the drain pipe. In general, the drain hose of the washing machine is a rubber outer tube, with a hard rubber or metal tube inserted in a discharge end. This has various drawbacks. First of all, a heavy rubber (eg. neoprene) hose is expensive, liable to entangle itself, and is excessively hard. Moreover, such a type of hose is extendable only by using extra fittings and a clamp.

Currently, the drain hose of a washing machine is often a corrugated (concertina) plastic hose formed by casting or molding. This type of plastic hose is inexpensive, not liable to entanglement, and is more flexible than the heavy neoprene hose. However, the discharge end of such plastic hose can not be formed to have a permanently fixed shape due to its inherent flexibility. Therefore, in general, for maintaining a 180° bend in the discharge end, a wire retainer is used. Nevertheless, the corrugated plastic hose has its own problems, as follows.

It is difficult for the light weight plastic hose to keep the discharge end in position inserted in the drain pipe against vibration of the hose and strong pulsation of water when the water is pumped out of the washing machine. The vibration of the hose in the drain pipe may also damage the hose due to wear. Moreover, the user may not assemble correctly the corrugated hose using the wire retainer. Lastly, this type of drain hose structure cannot be extended when required.

A drain hose assembly having a flexible and corrugated plastic hose, and a synthetic rubber nozzle connected to the plastic hose has been proposed. The plastic hose has a first end connected to the washing machine, and a second end having two annular barbs each projected from an outer circumferential surface. The nozzle has a third end with two recessed channels in an inner circumferential surface for receiving the two annular barbs for connection to the second end, and a fourth end for discharge.

The drain hose assembly, in which the second end of the plastic hose is inserted in the third end of the nozzle, keeps its seal as the outside circumferential surfaces of the two annular barbs are in close contact with the inside circumferential surfaces of the two annular channels. When connected, the nozzle is also rotatable with respect to the plastic hose without breaking the seal. The nozzle can bent around 180° for easy connection to the drain pipe.

This type of drain hose does not entangle, is easy to mount, and permits stable connection with the drain pipe. However, the foregoing drain hose assembly has the following problems. The engagement of the rubber nozzle and the plastic hose may deform where it engages when exposed to high temperature washing water and detergent for a long period. This may cause leakage at the engaged parts. When connection of the nozzle of the drain hose assembly of the nozzle and the hose to the drain pipe is difficult, it is necessary to turn the nozzle to an angle with respect to the hose until the connection becomes easy. Since the engaged part of the nozzle and hose is in close contact with each other to form the seal, turning of the nozzle in an assembled state can be difficult.

The present invention is directed to an assembly including an electrical appliance and a drain hose that substantially obviates one or more of the problems due to limitations and disadvantages of the related art.

US-A-5,312,138 discloses a drain hose assembly for an automatic washer comprising a flexible corrugated plastic hose having an end inter-connectable with the automatic washer and a second barbed connection end insertable into a tubular elastomeric connection member such that a rotatable sealable connection is provided between the barbed connection end and the tubular elastomeric connection member.

An elastomeric tubular nozzle formed into an approximate 180° arc and having an enlarged end including the formed elastomeric connection member may be provided for providing a discharge end to the drain hose assembly.

EP-A-0 527 297 discloses a corrugated tube bending hose, the angular corrugations of which have straight flanks inclined pairs towards one another at an unequal angle in relation to the longitudinal axis of the hose. Corrugated tube bending hoses of this type are of adjustable length and are dimensionally stable at their bending point.

US-A- 5,311,753 discloses a hose continuous in series throughout an entire length integrally formed with a water-intake port, L-shaped bending part, an intermediate part and a drain port in this order from one end of the hose to the other. The substantially general part of the intermediate part is formed with corrugations having inclined side walls of unequal length which are constructed so that shorter inclined walls can be easily brought into their contracted positions substantially parallel to the longer inclined walls and they can self hold their position. The L-shape bending part of the hose is located in an outer casing of a washing machine and is maintained by a bending means connected to the hose by two angular bands.

EP-A-1 201 981 discloses an outlet hose for household appliances such as washing machines, dishwashers and the like which has three extensible and orientable bellows. A first bellow is located adjacent to an outlet of the household appliance inside the appliance, a second bellow is disposed through the rear panel of the appliance and supports a thermo-plastic rubber ring by which it is coupled to the casing of the appliance. A third bellows is arranged to connect the outlet hose to the edge portion of a linen washing basin through which water from the machine can be disposed.

An object of the present invention is to provide an assembly including an electrical appliance and a drain hose , such as washing machine or dish washer, having a water outlet on its outside and a drain hose, which can be bent easily for stable and convenient connection to a drain facility, and prevent leakage.

Another object of the present invention is to provide an improved structure of a drain hose which can prevent disengagement of the hose and the drain facility due to pulsed disturbance caused by the irregular discharge of water.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

The invention is set out in independent claims 1 and 15.

Advantageously, the third bellows provided in the middle of the drain hose permits adjustment of the hose to an optimal length.

A continuous drain hose for an electrical appliance having a water outlet (e.g., a clothes washing machine or dish washer) comprises a first cylindrical end portion connectable to the water outlet, a second end portion connectable to a drain pipe, a bellows that is able to form a permanent bend when a temporary bending force is applied thereto, and a flexible corrugated portion connected between the first cylindrical end portion and the second end portion. The bellows of the second end portion is also permanently expandable or retractable when a temporary pulling or pressing force is applied thereto.

The drain hose may further comprise an elastic connection member integrally molded to the first cylindrical end portion, the elastic connection member being sealably connectable to the water outlet. The first cylindrical end portion may comprise at least one annular ring externally formed thereon so as to prevent the molded elastic connection member from disengaging from the first cylindrical end portion. The bellows of the second end portion may comprise a plurality of folds for forming the permanent bend, where the profile of each fold comprises an inclined wall extending from a first lower point to a middle peak point and a declined wall extending from the middle peak point to a second lower further point. In the profile, the angle formed between the inclined wall and a vertical axis passing through the middle peak point is greater than the angle formed between the vertical axis and the declined wall. The second end portion may further comprise a cylindrical portion directly connected to the bellows and an elastic connection member, which is integrally molded to the cylindrical portion and is sealably connectable to the drain pipe. The cylindrical portion of the second end portion may comprise at least one annular ring externally formed thereon so as to prevent the molded elastic connection member from being disengaged from the second end portion.

Another continuous drain hose for a clothes washing machine or dish washer having a water outlet comprises a first end portion being connectable to the water outlet, a first bellows that is able to form a first permanent bend when a first temporary bending force is applied thereto, a second end portion connectable to a drain pipe, a second bellows able to form a second permanent bend when a second temporary bending force is applied thereto, and a flexible corrugated portion connected between the first and second end portions.

The first end portion may further comprise a cylindrical portion directly connected to the first bellows and an elastic connection member, which is integrally molded to the cylindrical portion and is sealably connectable to the water outlet. The cylindrical portion of the first end portion may comprise at least one annular ring externally formed thereon so as to prevent the molded elastic connection member from being disengaged from the first end portion. In addition, the second end portion of the drain hose may further comprise a cylindrical portion directly connected to the second bellows, and an elastic connection member, which is integrally molded to the cylindrical portion and is sealably connectable to the drain pipe. The cylindrical portion of the second end portion may comprise at least one upright externally formed thereon so as to prevent the molded elastic connection member from being disengaged from the second end portion.

In an embodiment of the invention, a continuous drain hose for a clothes washing machine or a dish washer having a water outlet on its outside comprises a first end portion being connected to the water outlet, a first bellows able to form a first permanent bend when a first temporary bending force is applied thereto, a second end portion connectable to a drain pipe and comprising a second bellows able to form a second permanent bend when a second temporary bending force is applied thereto, and a third bellows able to be permanently expanded or retracted when a first temporary pulling or pressing force is applied thereto. The drain hose further comprises a first flexible corrugated portion connected between the first end portion and the third bellows and a second flexible corrugated portion connected between the third bellows and the second end portion.

Each of the first and second bellows can preferably also be permanently expandable or retractable when a second temporary pulling or pressing force is applied thereto, and on the other hand, the third bellows can preferably form a third permanent bend when a third temporary bending force is applied thereto.

It is to be understood that both the foregoing general description and the following detailed description of the present invention are exemplary and explanatory and are intended to provide further explanation of the invention as claimed.

The accompanying drawings, which are included to provide a further understanding of the invention and are incorporated in and constitute a part of this application, illustrate embodiment(s) of the invention and together with the description serve to explain the principle of the invention. In the drawings;
FIGS. 1A ~ 1D illustrate different embodiments of a second end portion of a drain hose of the present invention each showing a 180° bent second bellows, schematically;
FIGS. 1E and 1F illustrate the embodiments in FIG. 1C each showing a 90° bent second bellows, schematically;
FIGS. 2A - 2C illustrate different embodiments of a first end portion of a drain hose of the present invention;
FIG. 3 illustrates a perspective view of one embodiment of an assebly according to the invention, including a drain hose having embodiments of the FIGS. 1C and 2B applied thereto in use;
FIG. 4 illustrates a section of the drain hose in FIG. 3;
FIG. 5A illustrates a section showing connection of a second cylindrical part and a collar in a drain hose having the embodiment in FIG. 1C applied thereto;
FIG. 5B illustrates a section showing connection of a second cylindrical part and a collar in a drain hose having the embodiment in FIG. 1D applied thereto;
FIG. 6A illustrates a section showing connection of a first cylindrical part and a collar in a drain hose having the embodiment in FIG. 2B applied thereto;
FIG. 7 illustrates an enlarged section of an "A" part in FIG. 4;
FIG. 8 illustrates a back side perspective view of a washing machine having a drain hose holder provided thereto, additionally; and
FIG. 9 illustrates a plan view of an embodiment of a drain hose holder.

Reference will now be made in detail to the preferred embodiments of the present invention, examples of which are illustrated in the accompanying drawings. Wherever possible, the same reference numbers will be used throughout the drawings to refer to the same or like parts.

The drain hose of the present invention includes a first end portion, a second end portion, and a corrugated portion for connecting the first and second end portions. The first and second end portions may have a variety of forms, and free flexible bending means may be further provided in the middle of the corrugated portion. Accordingly, there may be a variety of embodiments of the drain hose as above elements make many combinations.

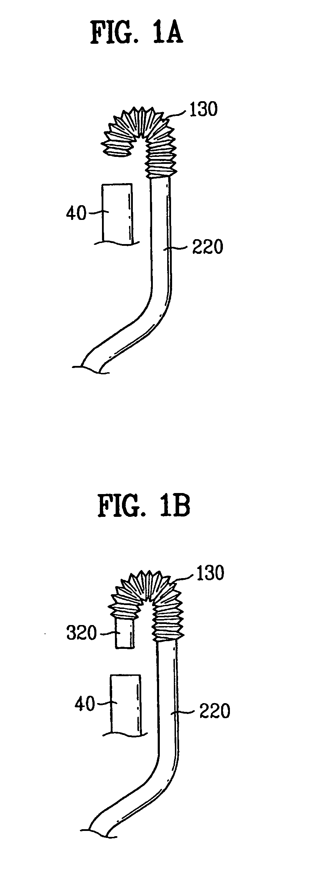

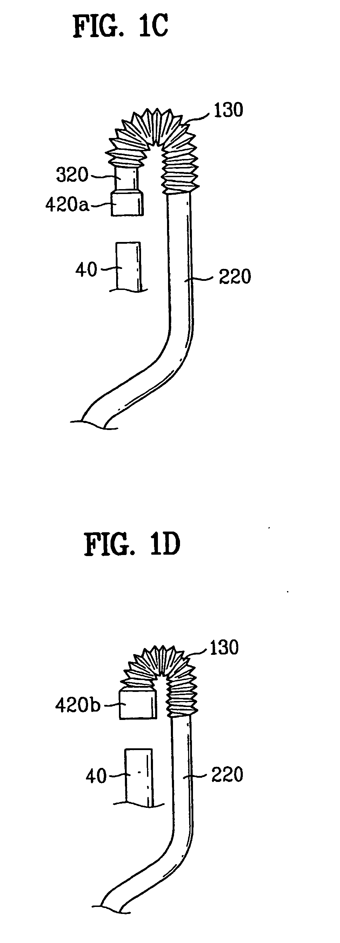

FIGS. 1A ~ 1D illustrate different embodiments of one end portion of a drain hose of the present invention, particularly, different embodiments of a second end portion connected to an external drain pipe 40 of the present invention. FIG. 1A illustrates an embodiment in which the second end portion of the drain hose only has a bellows, which is labelled a second bellows 130 for convenience of description.

Before starting description of the second bellows 130, the corrugated portion connecting the first and second end portions will be described, briefly. For convenience of description, the corrugated portion will be called a second corrugated portion. The second corrugated portion 220 is a corrugated tube of a flexible plastic having a plurality of corrugations on an outside circumference for improving the rigidity of the tube. The corrugated tube is employed in many general washing machines as a drain hose, of which detailed description will be omitted. In the present invention, the corrugation is omitted for simplicity and for more clear illustrative distinction from the second bellows 130.

The bellows 130 is formed in succession to the second corrugated portion 220. The second bellows 130 is able to form a permanent bend when a temporary bending force is applied. The permanent bend implies, not a perfect and irreversible bending, but a deformation which can be substantially maintained even after the temporary bending force is removed. Therefore, the second bellows 130 can be bent freely by applying an external force thereto whenever required. Moreover, a length of the bellows 130 is also extendable. It is preferable that both the second corrugated portion 220 and the second bellows 130 are formed of plastic as one unit by molding or casting.

Referring to FIG. 1A, the second end portion of the drain hose includes a second bellows 130 connected to the second corrugated portion 220 in succession, an end portion of the second bellows 130 is inserted in a drain pipe 40 to a sufficient depth and the second bellows 130 is bent to an optimal angle and form for the drain hose. FIG. 1A illustrates a shape the second bellows 130 is bent by 180°.

If the diameter of the drain pipe 40 is smaller than the second bellows 130, after inserting a portion of the drain pipe 40 in the second bellows 130, the second bellows 130 may be clamped with a clamp or band to prevent leakage.

When one end portion of the drain hose connected to the drain pipe 40 has the foregoing structure, since the bellows 130 can be bent easily, mounting of the drain hose is very easy even for different heights and attitudes of drain pipes. In the embodiment illustrated in FIG. 1B, the second end portion of the drain hose of the present invention includes a second bellows 130 and a snout forming a snout or cylindrical portion 320. As the second corrugated portion 220 has the same form as that in the embodiment described with reference to FIG. 1A, description of the second corrugated portion 220 will be omitted. Only the snout 320 will be further described.

The snout 320 has open opposite ends, and is formed as a continuation to the second bellows 130. The snout 320 is smooth and has no corrugation on the outside. The snout 320 is formed of plastic. It is preferable that it is formed as one unit with the second bellows 130 and the second corrugated portion 220 by casting or molding.

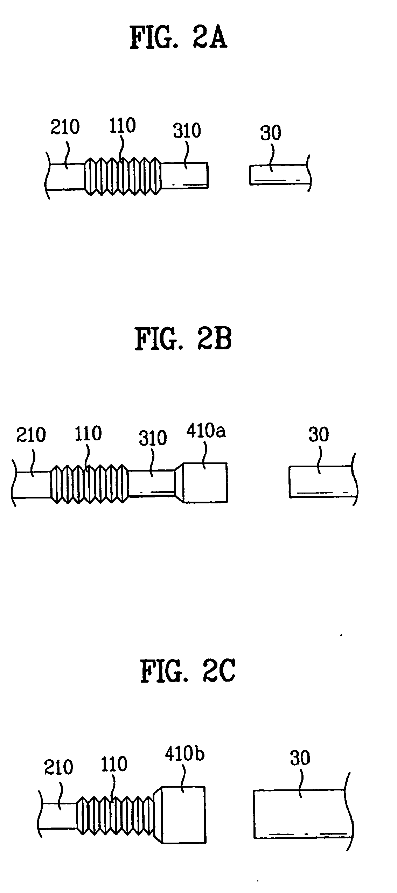

In the embodiment of the drain hose of the present invention illustrated in FIG. 1B, at least a portion of the snout 320 is inserted in the drain pipe 40. In this instance, after inserting the snout 320 in the drain pipe 40, the second bellows 130 is bent as necessary. FIG. 2B also illustrates the second bellows 130 bent by 180°.

In this embodiment too, if a diameter of the drain pipe 40 is smaller than a diameter of the snout 320, the snout 320 and the drain pipe 40 may be connected by inserting a portion of the drain pipe 40 in the snout 320 and clamping with a clamp or a band.

The drain hose of FIG. 1B enables an easy connection to the drain pipe 40, and prevents separation of the drain hose from the drain pipe 40 caused by vibration and pulsation occurred in discharge of water because the snout 320 has a weight that urges the drain hose to stay in the drain pipe 40.

The second end portion of the drain hose illustrated in FIG. 1C includes a second bellows 130, a snout 320, and an elastic collar or connection member 420a. Detailed structures of, and connection between the second bellows 130 and the snout 320 are the same with the description given with reference to FIGS. 1A and 1B, of which description will be omitted, and only the collar 420a will be described further.

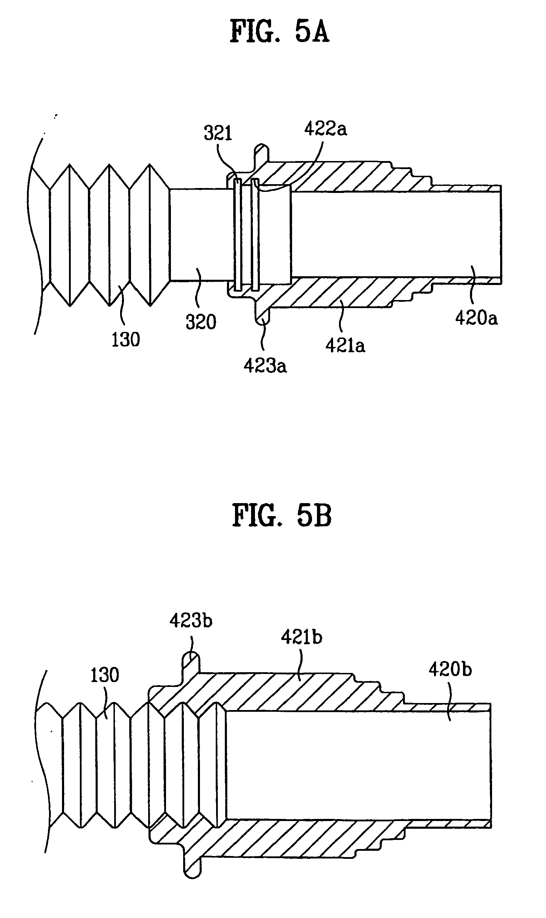

The collar 420a, provided for easy connection of the drain hose to the drain pipe 40, is a tube of an elastic rubber or plastic. The collar 420a has one end portion integrally molded with the snout 320 and the other end portion sealably connected over the drain pipe 40. Detailed structures and connections of the collar 420a and the snout 320 are shown in FIG. 5A, referring to which the detailed structures and connection of the collar 420a and the snout 320 will now be described in detail.

The collar 420a is formed of an elastic rubber molded at an end portion of the snout 320 as one unit. The collar 420a is cylindrical, and includes a plurality of reinforcing ribs 421 a on an outside circumference for radial strength. As shown in FIG. 5A, the longitudinal reinforcing ribs 421a project from the outside circumferential surface of the collar 420a in a radial direction and are disposed at regular angular intervals. For an example, the reinforcing ribs 421a project from upper and lower, and left and right sides of the outside circumferential surface of the collar 420a, to form a cross when the collar 420a is seen from a front. The reinforcing ribs 421a provide reinforcing strength, and an elastic restoring force of the collar 420a.

The collar 420a and the snout 320 are provided with structures for preventing separation from each other. That is, the snout 320 has at least one annular ring 321 on an outside surface thereof, and the collar 420a has at least one annular groove 422a in an inside surface thereof for receiving the ring 321. Therefore, even if a force is applied to the connection of the collar 420a and the snout 320 in a longitudinal direction, they are not easily separated from each other.

The collar 420a also has a flange 423a for reinforcing a connection part to the snout 320. As shown in FIG. 5A, the flange 423a is provided in the vicinity of a thinner part where the annular retaining groove 422a is. The flange 423a serves, not only for strength reinforcement, but also as a convenient on the drain hose to prevent the drain hose from slipping out of the hand when the drain hose is connected to, or separated from, the drain pipe 40.

For keeping a positive and reliable connection and seal between the drain pipe 40 and the collar 420a for a long time, a clamp or a band may be used in the connection between the collar 420a and the drain pipe 40.

For using the drain hose of the present invention having the second end portion that has the structure as shown in FIG. 1C, a portion of the drain pipe 40 is inserted in the collar 420a, and bent appropriately to suit to the circumstances. FIG. 1C illustrates an example in which the second bellows 130 is bent by 180°.

In this case, the collar 420a expands in a radial direction elastically when the drain pipe 40 is inserted into it, such that the collar 420a engages the drain pipe 40 radially to make an inside circumferential surface of the collar 420a a sealing contact with the outside circumferential surface of the drain pipe 40.

Though not shown, when the diameter of the drain pipe 40 is greater than the diameter of the collar 420a, the drain hose may be mounted in a form similar to that in FIG. 1B. That is, the drain hose is mounted by inserting the collar 420a of rubber in the drain pipe 40 to a depth, and bending the second bellows 130 appropriately. When the drain hose is mounted thus, because the collar 420a of rubber is heavier than plastic, the portion of the collar 420a inserted in the drain pipe 40 is not separated from the drain pipe 40 even if vibration and pulsation occurs.

Therefore, if the second end portion of the drain hose has a structure as illustrated in FIG. 1C, more positive connection and sealing can be maintained for a long time, together with the advantages of the embodiment described with reference to FIG. 1A.

FIG. 1D illustrates an embodiment, in which a second end portion of the drain hose of the present invention includes a second bellows 130 and a collar 420b. In FIG. 1D there is no snout 320, and the collar 420b is directly connected to the second bellows. In this embodiment, a structure of the second bellows 130 is the same with the structure described with reference to FIG. 1A, description of which will be omitted. Connection between the second bellows 130 and the collar 420b will be described.

FIG. 5B illustrates a connection between a collar 420b and a second bellows 130. The collar 420b is provided with ribs 421b and a flange 423b similar to those embodiment described with reference to FIG. 5A. However, as shown in FIG. 5B, one end of the collar 420b is directly connected to the second bellows 130. As shown in FIG. 5B, if, as is preferable, the collar 420b and the second bellows 130 are molded as one unit, an outside surface of the corrugated second bellows 130 serves the same purpose as the annular ring 321 in FIG. 5A, to prevent the second bellows 130 and the collar 420b from being separated by a longitudinal pulling force.

If the second end portion of the drain hose has a structure as illustrated in FIG. 1D, the drain hose can be mounted by inserting the collar 420b in the drain pipe 40 or inserting a portion of the drain pipe 40 in the collar 420b, and bending the second bellows 130, appropriately. As such the advantages are similar to those of the mounting structure described with reference to FIG. 1C, and detailed description will be omitted.

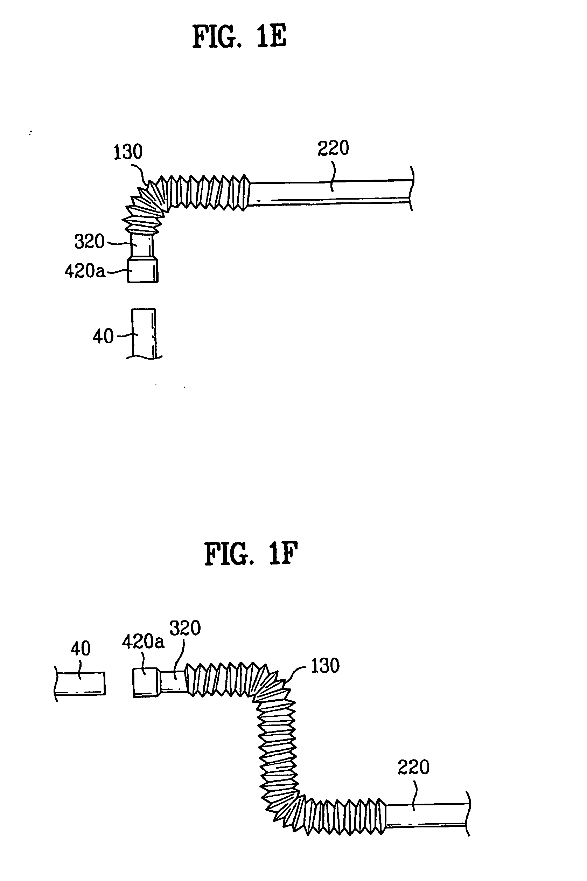

FIGS. 1A ~ 1D illustrate examples each showing the drain hose with the second bellows bent to about 180°. However, the drain hose of the present invention can be mounted, with the second bellows 130 bent to different angles suitable to different circumstances. Such examples of mounting the drain hose, with the second bellows 130 bent to different angles, for an example, 90°, are illustrated in FIGS. 1E and 1F.

FIGS. 2A - 2C illustrate different embodiments of first end portions of the drain hose, which will now be described in detail.

FIG. 2A illustrates an embodiment in which a first end portion to be connected to a water outlet 30 of the washing machine includes a first bellows 110 and a snout 310. Structures of the first bellows 110 and the snout 310 are the same as the structures of the second bellows 130 and the snout 320 described with reference to FIG. 1B. The reference numeral 210 in FIG. 2A denotes a tube connected to the corrugated tube of the bellows 110.

If the first end portion of the drain hose has a structure as shown in FIG. 2A, the drain hose can be used more favorably when the washing machine is installed in a narrow space, which will be described in more detail.

The washing machine, in general installed in a washing room often has its back or side close to a wall, for better utilization of space. Once the washing machine is installed close to the wall of the washing room, the drain hose connected to the back or side of the washing machine can get folded or squeezed, thereby blocking the passage of water. To address this, it is required to provide a gap between the washing machine and the wall of the washing room enough to enable a minimum bending radius at which the drain hose does not kink. This needs more space.

However, as in this embodiment the first bellows 110 is bent freely, and has a bending diameter substantially smaller than a normal corrugated drain hose, even if the washing machine is installed close to the wall of a washing room, the drain hose is not pressed or kinked, thereby improving space utilization. By fastening a connection part of the water outlet 30 and the snout 310 with a clamp or a band, sealing of the connection part can be improved.

FIG. 2B illustrates an embodiment in which a first end portion of the drain hose includes a first bellows 110, a snout 310, and a collar 410a. Structures of the first bellows 110 and the snout 310 are the same as previously described. A structure of the collar 410a, and connection between the snout 310 and the collar 410a will now be described.

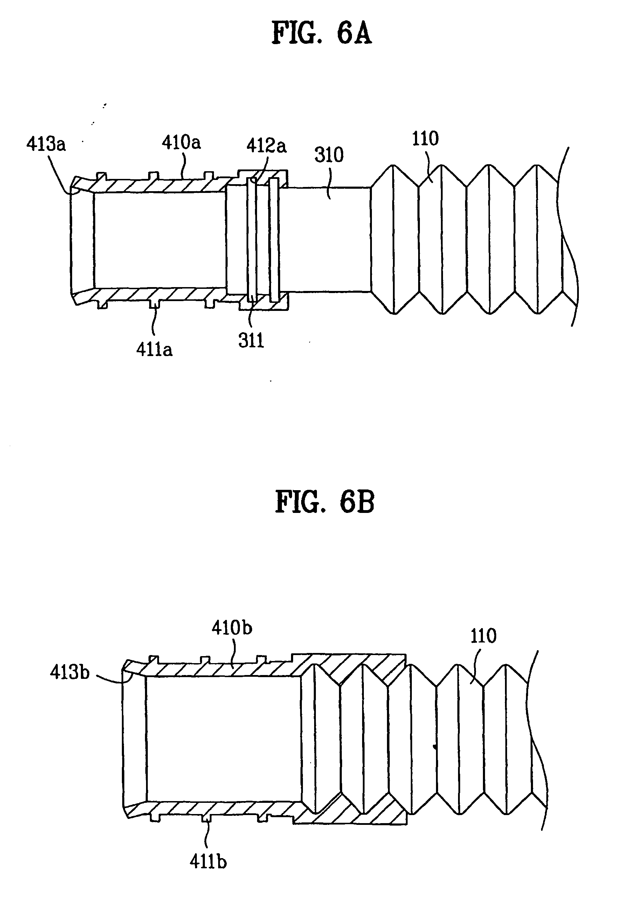

Referring to FIG. 6A, structures for firm connection of the collar 410a and the snout 310 are provided to the collar 410a and the snout 310 when they have to be assembled. Even if the collar 410a and the snout 310 are molded as one unit, since they are formed of different materials, the structures can be provided for enabling a reliable connection.

The snout 310, of plastic, has at least one annular ring projecting radially outwardly. The collar 410a, of elastic rubber, has an annular groove 412a in an inside circumferential surface for receiving and seating the annular ring 311 of the snout 310. Therefore, once the collar 410a and the snout 310 are molded together with the foregoing structures, the connection and seal between them is reliable.

The collar 410a of elastic rubber has at least one rib 411a on an outside surface for rigidity and elastic force. FIG. 6A shows an example of the annular rib 411a projecting radially from the outer surface of the collar 410a. This type of rib 411 a, increases the radial thickness of the collar 410a locally, to improve its strength, the elastic force it exerts against the outside surface of the water outlet 30. The rib 410 also provides a grip for the user's hand.

Referring to FIG. 6A, the collar 410a has a flared end 413a having a diameter increased gradually like a horn at the end for connection to the water outlet 30. This allows for easy introduction of the water outlet 30 into the collar 410a.

Though not shown, a clamp or a band may be used additionally for firmer connection of the collar 410a and the water outlet 30 and improved sealing at the connection. If the clamp or band is used, the plurality of annular ribs 411 a on the outside surface of the collar 410a can be used to define a fastening position of the clamp or the band and, thus, prevent slipping of the clamp or the band longitudinally.

The embodiment of the first end portion of the drain hose illustrated in FIG. 2B having the foregoing structure can provide more reliable connection owing to the collar 410a of rubber, while the embodiment still has all the advantages of the foregoing embodiments. That is, in insertion of the outside circumferential surface of the water outlet 30 to an inside circumferential surface of the collar 410a for connecting the first end portion of the drain hose and the water outlet 30, the collar 410a expands elastically, such that the inside circumferential surface of the collar 410a and the outside circumferential surface of the water outlet 30 come into close contact by the elastic force when fully inserted, to secure a good airtight seal at the connection.

FIG. 2C illustrates an embodiment in which a first end portion of the drain hose includes a first bellows 110, and a collar 410b. Description of structures of the first bellows 110 and the collar 410a has been given previously, and therefore, will be omitted. As shown in FIG. 6B, in this embodiment, the collar 410b is molded as one unit with the first bellows 110. Neither the groove 412a, nor the annular ring 311 referred in the embodiment described with reference to FIGS. 2B and 6a is present. In this embodiment, since the collar 410b is connected to the water outlet 30 according to the same principles as the embodiment described with reference to FIG. 2B, an improved reliability of seal is realized.

As described with reference to FIGS. 1A ~ 2C, the second end portion and the first end portion of the drain hose of the present invention can be realized in a variety of embodiments. The second end portion and the first end portion, connected with a flexible corrugated portion, form the drain hose of the present invention. Therefore, though not shown on every drain hose, the drain hose of the present invention can be realized in a variety of embodiments having the second end portion and the first end portion joined to opposite ends of the corrugated portion.

According to the present invention, another bellows which is longitudinally extendable is provided preferably in the middle of the corrugated portion, which will be called a third bellows for distinguishing this from the first and second bellows herein. With the third bellows provided in the middle of the corrugated portion, the corrugated portion has a first corrugated portion and a second corrugated portion connected to opposite ends of the third bellows. Therefore, the drain hose of the present invention having the third bellows includes a first end portion, a first corrugated portion, a third bellows, a second corrugated portion, a second bellows, and a second end portion, which are connected in succession.

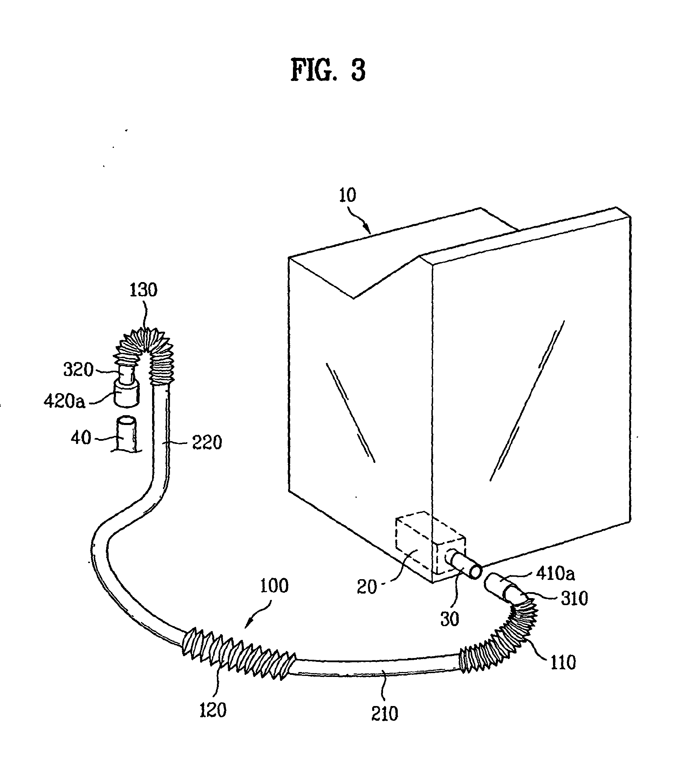

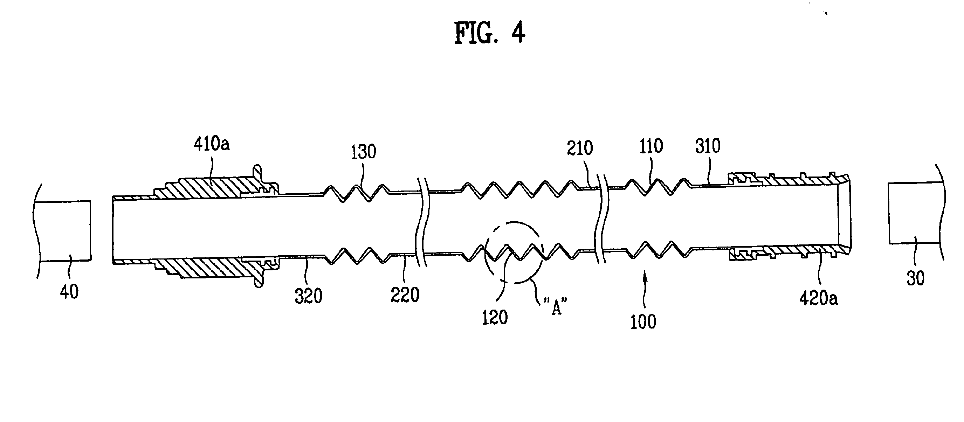

For a description of an overall structure of a preferred embodiment of an assembly according to the present invention. FIG. 3 or 4 illustrates one embodiment of the drain hose 100 including a first end portion of the embodiment in FIG. 2B, a second end portion of the embodiment in FIG. 1C and the third bellows 120 connected in series. The drain hose has the first snout 310, the first corrugated portion 210, the third bellows 120, the second corrugated portion 220, and the snout 320 formed of plastic as one unit. The collar 410a and the collar 420a are connected to the respective snouts 310 and 320. The drain hose 100 thus fabricated has the following advantages.

The first end portion, to be connected to a short water outlet 30 connected to the drain pump 20 of the washing machine 100, can be connected easily even in a narrow space without kinking or squeezing of the drain hose 100, because the corrugated portion 110 can be bent easily. The collar 410a of rubber, directly connected to the water outlet 30, enables an easy connection, and enhances sealing of the connection part to prevent leakage.

Since the corrugated part 130 can also be bent freely, the second end portion, connected to an external drain pipe 40, is also very conveniently installed. Of course, the corrugated part 130 can be mounted with ease even in a narrow space because it has a bending radius substantially smaller than a normal drain hose. Moreover, the collar 420a of rubber connected to the drain pipe 40 directly, not only enables an easy connection, but also enhances sealing of the connection part, to prevent leakage.

The third bellows 120 is longitudinally extendable. Therefore, when the drain pipe 40 and the washing machine 100 can not be spanned by the drain hose, the third bellows 120 can be stretched as necessary. Also, when the drain pipe 40 and the washing machine 100 are installed very close, the third bellows 120 may be bunched up, so as not to use up unnecessary space. Because the third bellows 120 is extendable/contractible in length as well as being preferably bendable, the drain hose 100 can be mounted very easily even when it has to be bent in the middle.

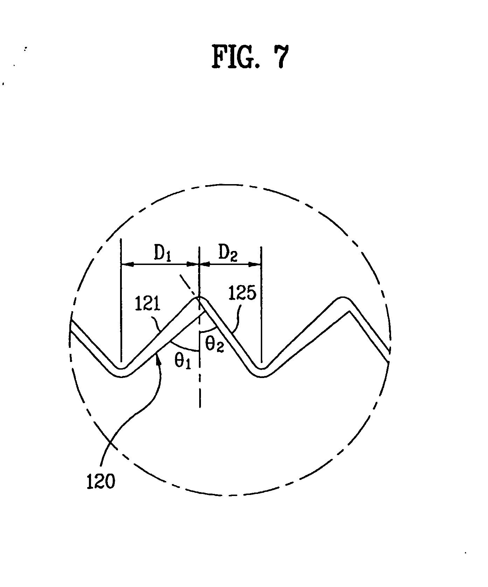

FIG. 7 illustrates an enlarged section of a portion of the third bellows 120. This sectional structure is applicable, not only to the third bellows 120, but also to the corrugated parts 110 and 130.

The third bellows 120 includes a plurality of folds each having a middle peak and a trough for forming the permanent bend. The fold has an inclined wall 121 extended from a left lower point at the trough toward the middle peak point, and a declined wall 125 extended from the middle peak point toward a right lower point in the next trough.

The fold has the following features. A first angle θ₁ between a lateral plane passing through the middle peak point and the inclined wall 121 is greater than a second angle θ₂ between the lateral plane and the declined wall 125. A longitudinal length D₁ of the inclined wall 121 is greater than a longitudinal length D₂ of the declined wall 125.

Referring to FIG. 7, an embodiment of the fold in which the horizontal length D₂ of the inclined wall 121 is shorter than the horizontal length D₁ of the declined wall 125 will be described.

The section of the third bellows 120 illustrated in FIG. 7 is symmetrical with respect to a longitudinal axis, as illustrated in FIG. 4. Such a structure of the third bellows 120 undergoes a length reduction as bellows are contracted when the declined wall 125 moves towards the inclined wall 121. When the declined wall 125 comes apart from the inclined wall 121, the third bellows 120 undergoes extension of the length to a form as shown in FIG. 7. The third bellows 120 is extendable in the length direction freely under the foregoing principle.

If the third bellows 120 is in a state in which the inclined and declined walls 121 and 125 are close together on one side of the axis of the pipe and the inclined and declined walls 121 and 125 are apart from each other on the other side of the axis, the third bellows 120 bends toward the side on which the walls are closer to each other.

The principles of extension and bending of the third bellows 120 are applicable to the first and second bellows 110 and 130, too.

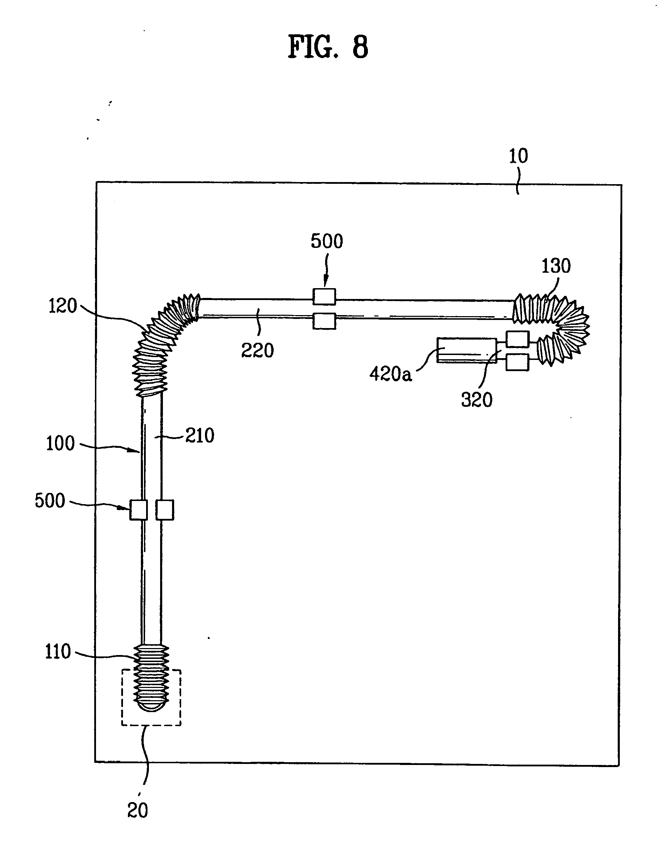

Referring to FIG. 8, the preferred embodiment of present invention provides a structure for attaching the drain hose 100 close to the side of the washing machine 100 during transport and movement of the washing machine 100. To do this, the washing machine 100 is provided with a plurality of hose holder clips 500 on one face, for an example, the back.

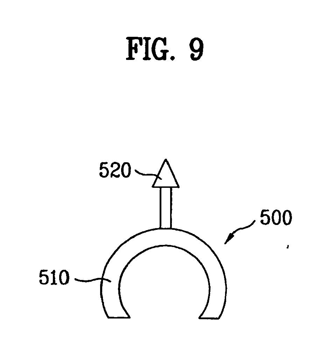

Referring to FIG. 9, the hose holder clip 500 includes a holding part 510 having an arcuate form with an inner circumferential surface, and a fixing pin 520 which is inserted in, and fixed to one surface of the washing machine 100.

The holding part 510 is of an elastic material and enables the drain hose 100 to be a push fit through an open side, to seat the drain hose 100 against the inner circumferential surface. In this instance, opposite ends of the holding part 510 move apart to opposite directions elastically, and, since the opposite ends of the holding part 510 return to original positions elastically after the drain hose 100 is inserted into the arc form of inner circumferential surface, the drain hose 100 can not escape from the holding part 510, but is caught by the opposite ends of the holding part 510. As shown in FIG. 9, the fixing pin 520 has a wedge shaped head, for one way insertion into a hole in a surface of the washing machine.

A plurality of the hose holders 500 are provided in the back of the washing machine 10 for holding the drain hose 100. Damage to the drain hose 100 in transit is reduced as the drain hose 100 is attached close to the washing machine in an orderly fashion.

As has been described, the drain hose of the present invention has the following advantages. First, the freely bendable bellows provided at opposite ends permits very easy mounting in a range of circumstances. Second, the freely extendable third bellows provided in the middle of the drain hose permits adjustment to an optimal length. Moreover, the preferred embodiment of the invention provides the following additional advantages. Third, the collars of rubber at opposite ends of the drain hose prevent leakage of water and enable reliable of connection. Fourth, the molding of all elements including the collars, the bellows, and the corrugated portion as one unit permits to prevent leakage of water effectively, as there is no extra mechanical connection. The advantages of the present invention include all the effects and advantages described in the detailed description of the preferred embodiment in addition to above.

It will be apparent to those skilled in the art that various modifications and variations can be made in the present invention without departing from the scope of the inventions. Thus, it is intended that the present invention covers the modifications and variations of this invention provided they come within the scope of the appended claims.

## Claims

1. An assembly including an electrical appliance (10) having a water outlet (30) on the outside of the appliance and a drain hose (100) which includes:
a first end portion being connected to the water outlet (30), the first end portion comprising a first bellows (110) operable to form a first permanent bend when a temporary bending force is applied thereto;
a second end portion being connectable to a drain pipe (40), the second end portion comprising a second bellows (130) operable to form a second permanent bend when a second temporary bending force is applied thereto;
**characterised by**
a third bellows (120) operable to be permanently expanded or retracted when a first temporary pulling or pressing force is applied thereto;
a first flexible corrugated portion (210) connected between the first end portion and the third bellows (120); and
a second flexible corrugated portion (220) connected between the third bellows (120) and the second end portion.

2. An assembly as claimed in claim 1, wherein the first end portion further comprises a cylindrical portion (310) connected to the first bellows, the cylindrical portion being directly connectable to the water outlet.

3. An assembly as claimed in claim 1, wherein the first end portion further comprises:
a cylindrical portion (310) connected to the first bellows; and
an elastic connection member (410a) integrally molded to the cylindrical portion, the elastic connection member being sealably connectable to the water outlet (30).

4. An assembly as claimed in claim 3, wherein the cylindrical portion (310) of the first end portion comprises at least one annular ring (311) externally formed thereon so as to prevent the molded elastic connection member (410) from being disengaged from the first end portion.

5. An assembly as claimed in claim 1, wherein the first end portion further comprises an elastic connection member (410b) integrally molded to a portion of the first bellows (110) the elastic connection member being sealably connectable to the water outlet (30).

6. An assembly as claimed in claim 1, wherein the second bellows (130) comprises a discharge end which is insertable into the drain pipe (40).

7. An assembly as claimed in claim 1, wherein the second end portion further comprises a cylindrical portion (320) directly connected to the second bellows (130), the cylindrical portion (320) having a discharge end which is insertable into the drain pipe (40).

8. An assembly as claimed in claim 1, wherein the second end portion further comprises:
a cylindrical portion (320) directly connected to the second bellows portion (130), and an elastic connection member (420a) integrally molded to the cylindrical portion (320), the elastic connection member being sealably connectable to the drain pipe.

9. An assembly as claimed in claim 8, wherein the cylindrical portion (320) of the second end portion comprises at least one annular ring (321) externally formed thereon so as to prevent the molded elastic connection member (420a) from being disengaged from the second end portion (310, 130).

10. An assembly as claimed in claim 1, wherein the second end portion further comprises an elastic connection member (402b) integrally molded to a portion of the second bellows (130), the elastic connection member (420b) being sealably connectable to the drain pipe. (40).

11. An assembly as claimed in claim 1, wherein each of the first and second permanent bends is a 180 or 90 degree arc.

12. An assembly as claimed in claim 1, wherein each of the first (110), second (130) and third (120) bellows comprises a plurality of folds and a profile of each of the plurality of folds comprises:
an inclined wall (121) extending from a left lower point to a middle peak point; and
a declined (125) wall extending from the middle peak point to a right lower point, wherein a first angle formed between the inclined wall (121) and a vertical axis passing through the middle top point is greater than a second angle formed between the vertical axis and the declined wall (125).

13. An assembly as claimed in claim 1, wherein each of the first (110) and second (130) bellows is also permanently expandable or retractable when a temporary pulling or pressing force is applied thereto.

14. An assembly as claimed in claim 1, wherein the third bellows (120) is able to form a third permanent bend when a temporary bending force is applied thereto.

15. Use of a drain hose (100) including:
a first end portion being connectable to a water outlet (30), and comprising a first bellows (110) operable to form a first permanent bend when a first temporary bending force is applied thereto;
a second end portion being connectable to a drain pipe (40), the second end portion comprising a second bellows (130) operable to form a second permanent bend when a second temporary bending force is applied thereto;
**characterised in that** the drain hose includes:
a third bellows (120) operable to be permanently expanded or retracted when a temporary pulling or pressing force is applied thereto;
a first flexible corrugated portion (210) connected between the first end portion and the third bellows (120); and
a second flexible corrugated portion (220) connected between the third bellows (120) and the second end portion;
and by connecting the first end portion of the hose (100) to a water outlet (30) on the outside of an electrical appliance (10).

## Patentansprüche

1. Einheit, welche ein Elektrogerät (10) mit einem Wasserauslass (30) an der Außenseite des Geräts, sowie einen Abflussschlauch aufweist, welcher enthält:
einen an den Wasserauslass (30) angeschlossenen ersten Endteil, wobei der erste Endteil einen ersten Faltenbalg (110) aufweist, der funktionsfähig ist, eine erst dauerhafte Biegung zu bilden, wenn eine temporäre Biegekraft darauf aufgetragen wird;
einen zweiten Endteil, der an ein Abflussrohr (40) anschließbar ist, wobei der zweite Endteil einen zweiten Faltenbalg (130) aufweist, der funktionsfähig ist, eine zweite dauerhafte Biegung zu bilden, wenn eine zweite temporäre Biegekraft darauf aufgetragen wird; **gekennzeichnet durch**
einen dritten Faltenbalg (120), der funktionsfähig ist, um dauerhaft auseinandergezogen oder zusammengezogen zu sein, wenn eine erste temporäre Zug- oder Druckkraft darauf aufgetragen wird;
einen ersten flexiblen, gerippten Teil (210), der zwischen dem ersten Endteil und dem dritten Faltenbalg (120) angeschlossen ist; und
einen zweiten flexiblen, gerippten Teil (220), der zwischen dem dritten Faltenbalg (120) und dem zweiten Endteil angeschlossen ist.

2. Einheit nach Anspruch 1, wobei der erste Endteil weiters einen zylindrischen Teil (310) aufweist, der an den ersten Faltenbalg angeschlossen ist, wobei der zylindrische Teil direkt an den Wasserauslass anschließbar ist.

3. Einheit nach Anspruch 1, wobei der erste Endteil weiters aufweist:
einen zylindrischen Teil (310), der an den ersten Faltenbalg angeschlossen ist; und
ein elastisches Verbindungsglied (410a), welches mit dem zylindrischen Teil einstückig geformt ist, wobei das elastische Verbindungsglied abdichtend an den Wasserauslass (30) anschließbar ist.

4. Einheit nach Anspruch 3, wobei der zylindrische Teil (310) des ersten Endteils zumindest einen kranzförmigen Ring (311) aufweist, der extern daran ausgebildet ist, sodass das geformte elastische Verbindungsglied (410) daran gehindert wird, von dem ersten Endteil gelöst zu werden.

5. Einheit nach Anspruch 1, wobei der erste Endteil weiters ein elastisches Verbindungsglied (410b) enthält, welches mit einem Teil des ersten Faltenbalgs (110) einstückig geformt ist, wobei das elastische Verbindungsglied abdichtend an den Wasserauslass (30) anschließbar ist.

6. Einheit nach Anspruch 1, wobei der zweite Faltenbalg (130) ein Austrittsende aufweist, welches in das Abflussrohr (40) einsetzbar ist.

7. Einheit nach Anspruch 1, wobei der zweite Endteil weiters einen zylindrischen Teil (320) aufweist, der direkt an den zweiten Faltenbalg (130) angeschlossen ist, wobei der zylindrische Teil (320) ein Austrittsende aufweist, welches in das Abflussrohr (40) einsetzbar ist.

8. Einheit nach Anspruch 1, wobei der zweite Endteil weiters einen zylindrischen Teil (320), der direkt an den zweiten Faltenbalg (130) angeschlossen ist, und ein elastisches Verbindungsglied (420a) aufweist, das mit dem zylindrischen Teil (320) einstückig geformt ist, wobei das elastische Verbindungsglied an das Abflussrohr abdichtend anschließbar ist.

9. Einheit nach Anspruch 8, wobei der zylindrische Teil (320) des zweiten Endteils zumindest einen kranzförmigen Ring (321) aufweist, der extern daran ausgebildet ist, sodass das geformte elastische Verbindungsglied (420a) daran gehindert wird, von dem zweiten Endteil (310, 130) gelöst zu werden.

10. Einheit nach Anspruch 1, wobei der zweite Endteil weiters ein elastisches Verbindungsglied (402b) aufweist, das mit einem Teil des zweiten Faltenbalgs (130) einstückig geformt ist, wobei das elastische Verbindungsglied (420b) abdichtend an das Abflussrohr (40) anschließbar ist.

11. Einheit nach Anspruch 1, wobei jede der ersten und zweiten dauerhaften Biegungen einen Bogen von 180 oder 90 Grad aufweisen.

12. Einheit nach Anspruch 1, wobei jeder der ersten (110), zweiten (130) und dritten (120) Faltenbälge eine Vielzahl von Falten aufweist, und ein Profil von jeder der Vielzahl an Falten aufweist:
eine geneigte Wand (121), die sich von einem linken unteren Punkt zu einem mittleren Spitzenpunkt erstreckt; und
eine abwärts geneigte Wand (125), die sich von dem mittleren Spitzenpunkt zu einem rechten unteren Punkt erstreckt, wobei ein erster Winkel, der zwischen der geneigten Wand (121) und einer Vertikalachse, die durch den mittleren, oberen Punkt durchläuft, gebildet ist, größer ist, als ein zweiter Winkel, der zwischen der vertikalen Achse und der abwärts geneigten Wand (125) gebildet ist.

13. Einheit nach Anspruch 1, wobei jeder der ersten (110) und zweiten (130) Faltenbälge ebenfalls dauerhaft auseinanderziehbar oder zusammenziehbar ist, wenn eine temporäre Zug- oder Druckkraft darauf aufgetragen wird;

14. Einheit nach Anspruch 1, wobei der dritte Faltenbalg (120) in der Lage ist, eine dritte dauerhafte Biegung auszubilden, wenn eine temporäre Biegekraft darauf aufgetragen wird.

15. Verwendung eines Abflussschlauchs (100), welcher enthält:
einen ersten Endteil, der an einen Wasserauslass (30) anschließbar ist, und der einen ersten Faltenbalg (110) aufweist, der funktionsfähig ist, eine erst dauerhafte Biegung zu bilden, wenn eine erste temporäre Biegekraft darauf aufgetragen wird;
einen zweiten Endteil, der an ein Abflussrohr (40) anschließbar ist, wobei der zweite Endteil einen zweiten Faltenbalg (130) aufweist, der funktionsfähig ist, eine zweite dauerhafte Biegung zu bilden, wenn eine zweite temporäre Biegekraft darauf aufgetragen wird;
**dadurch gekennzeichnet, dass** der Abflussschlauch enthält:
einen dritten Faltenbalg (120), der funktionsfähig ist, um dauerhaft auseinandergezogen oder zusammengezogen zu sein, wenn eine temporäre Zug- oder Druckkraft darauf aufgetragen wird;
einen ersten flexiblen, gerippten Teil (210), der zwischen dem ersten Endteil und dem dritten Faltenbalg (120) angeschlossen ist;
einen zweiten flexiblen, gerippten Teil (220), der zwischen dem dritten Faltenbalg (120) und dem zweiten Endteil angeschlossen ist;
und durch Anschließen des ersten Endteils des Schlauchs (100) an einen Wasserauslass (30) an der Außenseite eines Elektrogeräts (10).

## Revendications

1. Assemblage comprenant un appareil électrique (10) ayant une sortie d'eau (30) sur le côté extérieur de l'appareil et un tuyau de drainage (100), comprenant:
une première partie d'extrémité connectée à la sortie d'eau (30), la première partie d'extrémité comprenant des premiers soufflets (110) pouvant former une première courbe permanente lorsqu'une force de flexion temporaire leur est appliquée;
une deuxième partie d'extrémité pouvant être connectée à un tuyau de drainage (40), la deuxième partie d'extrémité comprenant des deuxièmes soufflets (130) pouvant former une deuxième courbe permanente lorsqu'une deuxième force de flexion temporaire leur est appliquée; **caractérisé en ce que**:
des troisièmes soufflets (120) pouvant être expansés ou contractés de façon permanente lorsqu'une première force de traction ou de pression temporaire leur est appliquée;
une première partie ondulée flexible (210) connectée entre la première partie d'extrémité et les troisièmes soufflets (120); et
une deuxième partie ondulée flexible (220) connectée entre les troisièmes soufflets (120) et la deuxième partie d'extrémité.

2. Assemblage selon la revendication 1, dans lequel la première partie d'extrémité comprend en outre une partie cylindrique (310) connectée aux premiers soufflets, la partie cylindrique pouvant être directement connectée à la sortie d'eau.

3. Assemblage selon la revendication 1, dans lequel la première partie d'extrémité comprend en outre:
une partie cylindrique (310) connectée aux premiers soufflets; et
un élément de connexion élastique (410a) moulé d'une seule pièce avec la partie cylindrique, l'élément de connexion élastique pouvant être connecté de façon étanche à la sortie d'eau (30).

4. Assemblage selon la revendication 3, dans lequel la partie cylindrique (310) de la première partie d'extrémité comporte au moins une bague annulaire (311) formée extérieurement sur celle-ci dans le but d'empêcher l'élément de connexion élastique moulé (410) d'être désengagé de la première partie d'extrémité.

5. Assemblage selon la revendication 1, dans lequel la première partie d'extrémité comprend en outre un élément de connexion élastique (410b) moulé d'une seule pièce avec une partie des premiers soufflets (110), l'élément de connexion élastique pouvant être connecté de façon étanche à la sortie d'eau (30).

6. Assemblage selon la revendication 1, dans lequel les deuxièmes soufflets (130) comportent une extrémité de décharge qui peut être insérée dans le tuyau de drainage (40).

7. Assemblage selon la revendication 1, dans lequel la deuxième partie d'extrémité comprend en outre une partie cylindrique (320) directement connectée aux deuxièmes soufflets (130), la partie cylindrique (320) comportant une extrémité de décharge qui peut être insérée dans le tuyau de drainage (40).

8. Assemblage selon la revendication 1, dans lequel la deuxième partie d'extrémité comprend en outre:
une partie cylindrique (320) directement connectée à la partie des deuxièmes soufflets (130), et un élément de connexion élastique (420a) moulé d'une seule pièce avec la partie cylindrique (320), l'élément de connexion élastique pouvant être connecté de façon étanche au tuyau de drainage.

9. Assemblage selon la revendication 8, dans lequel la partie cylindrique (320) de la deuxième partie d'extrémité comporte au moins une bague annulaire (321) formée extérieurement sur celle-ci dans le but d'empêcher l'élément de connexion élastique moulé (420a) d'être désengagé de la deuxième partie d'extrémité (310, 130).

10. Assemblage selon la revendication 1, dans lequel la deuxième partie d'extrémité comprend en outre un élément de connexion élastique (402b) moulé d'une seule pièce avec une partie des deuxièmes soufflets (130), l'élément de connexion élastique (420b) pouvant être connecté de façon étanche au tuyau de drainage (40).

11. Assemblage selon la revendication 1, dans lequel chacune des première et deuxième courbes permanentes est un arc de 180 ou 90 degrés.

12. Assemblage selon la revendication 1, dans lequel chacun des premiers (110), deuxièmes (130) et troisièmes (120) soufflets comporte une pluralité de plis, et un profil de chacun parmi la pluralité de plis comprend:
une paroi inclinée (121) s'étendant du point inférieur gauche à un point de sommet médian; et
une paroi inclinée (125) s'étendant du point de sommet médian à un point inférieur droit, dans lequel un premier angle formé entre la paroi inclinée (121) et un axe vertical passant par le point de sommet médian est supérieur à un deuxième angle formé entre l'axe vertical et la paroi inclinée (125).

13. Assemblage selon la revendication 1, dans lequel chacun des premiers (110) et deuxièmes (130) soufflets peut aussi être expansé ou contracté de façon permanente lorsqu'une force de traction ou de pression temporaire leur est appliquée.

14. Assemblage selon la revendication 1, dans lequel les troisièmes soufflets (120) sont capables de former une troisième courbe permanente lorsqu'une force de flexion temporaire leur est appliquée.

15. Utilisation d'un tuyau de drainage (100), comprenant:
une première partie d'extrémité pouvant être connectée à une sortie d'eau (30), et comprenant des premiers soufflets (110) pouvant former une première courbe permanente lorsqu'une première force de flexion temporaire leur est appliquée;
une deuxième partie d'extrémité pouvant être connectée à un tuyau de drainage (40), la deuxième partie d'extrémité comprenant des deuxièmes soufflets (130) pouvant former une deuxième courbe permanente lorsqu'une deuxième force de flexion temporaire leur est appliquée;
**caractérisée en ce que** le tuyau de drainage comprend:
des troisièmes soufflets (120) pouvant être expansés ou contractés de façon permanente lorsqu'une première force de traction ou de pression temporaire leur est appliquée;
une première partie ondulée flexible (210) connectée entre la première partie d'extrémité et les troisièmes soufflets (120); et
une deuxième partie ondulée flexible (220) connectée entre les troisièmes soufflets (120) et la deuxième partie d'extrémité;
et la connexion de la première partie d'extrémité du tuyau (100) à une sortie d'eau (30) sur le côté extérieur d'un appareil électrique (10).
